# EUROPÄISCHE PATENTSCHRIFT

(11) **EP 1 931 553 B1**
(45) Veröffentlichungstag und Bekanntmachung des Hinweises auf die Patenterteilung: **02.12.2009**
(21) Anmeldenummer: 06805895.7
(22) Anmeldetag: 27.09.2006
(51) Int. Cl.: B62D 1/184

(54) **LENKSÄULE FÜR EIN KRAFTFAHRZEUG**
STEERING COLUMN FOR A MOTOR VEHICLE
COLONNE DE DIRECTION POUR VEHICULE AUTOMOBILE

(30) Priorität: 05.10.2005 DE 102005047789
(43) Veröffentlichungstag der Anmeldung: 18.06.2008
(73) Patentinhaber: ThyssenKrupp Presta Aktiengesellschaft, 9492 Eschen (LI)
(72) Erfinder: HUBRECHT, Robert, W., CH-9469 Haag (CH); HORNICH, Thorsten, FL-9493 Mauren (LI)
(74) Vertreter: Hofmann, Ralf U.
(86) Internationale Anmeldenummer: PCT/EP2006/009372
(87) Internationale Veröffentlichungsnummer: WO 2007/039197

(56) Entgegenhaltungen:
- EP-A1- 0 900 943
- GB-A- 2 312 272

## Beschreibung

Die Erfindung betrifft eine Lenksäule für ein Kraftfahrzeug, die zumindest in eine Verstellrichtung verstellbar ist, umfassend eine drehbar gelagerte Lenkspindel, eine Manteleinheit, die einen Abschnitt der Lenkspindel drehbar lagert, eine Trageinheit, die mit dem Chassis des Kraftfahrzeugs verbindbar ist und gegenüber der die Manteleinheit in die zumindest eine Verstellrichtung verstellbar ist, und einen Spannmechanismus, in dessen geöffnetem Zustand die Position der Lenksäule verstellbar ist und in dessen geschlossenem Zustand die Position der Lenksäule festgestellt ist und die Manteleinheit mit der Trageinheit verspannt ist, wobei der Spannmechanismus einen Spannbolzen, der die Manteleinheit und die Trageinheit quer zur Achse der Lenkspindel durch Öffnungen durchsetzt, und erste und zweite auf dem Spannbölzen angeordnete Spannglieder umfasst, von denen das erste Spannglied zum Öffnen und Schließen des Spannmechanismus gegenüber dem zweiten Spannglied zwischen einer Offenstellung und einer Schließstellung um die Achse des Spannbolzens oder um eine rechtwinklig zur Achse des Spannbolzens stehende Achse verdrehbar ist und zwischen denen Wälzkörper zur Reibungsminderung bei der gegenseitigen Verdrehung angeordnet sind.

Verstellbare Lenksäulen dienen zur Anpassung der Position des Lenkrades an die Sitzposition des Fahrers. Die Bedeutung einer auf die Bedürfnisse des Fahrers abgestimmten Position des Lenkrades darf dabei nicht unterschätzt werden. Erfolgt die Positionierung ungünstig, so kann sich der Fahrer nicht vollständig auf den Verkehr konzentrieren und ermüdet schneller, was insbesondere bei längeren Fahrten zum Tragen kommt. Auch kann das subjektive Lenkgefühl negativ beeinflusst werden, was in Grenzsituationen zu Fahrfehlern führen kann. Gerade für den Fall häufig wechselnder Fahrer ist daher die gute Bedienbarkeit der Einstellung der Position der Lenksäule wichtig.

Bei verstellbaren Lenksäulen soll die zur Fixierung der eingestellten Position dienende Fixiereinrichtung in ihrem geschlossenen Zustand möglichst hohe Fixierkräfte aufbringen, damit ein unbeabsichtigtes Verstellen der Lenksäule verhindert wird, beispielsweise beim Aufstützen des Fahrers auf das Lenkrad während der Fahrt keine unkontrollierte Verstellung der Lage des Lenkrads erfolgen kann. Gleichzeitig soll die Fixiereinrichtung leichtgängig und mit geringen Wegen der Betätigungselemente geöffnet und geschlossen werden können und nur wenig Bauraum einnehmen. Insbesondere im geschlossenen Zustand der Fixiereinrichtung sollen weiters durch Schwingungen des Fahrzeugs hervorgerufene Schwingungen von Teilen der Lenksäule möglichst ausgeschlossen sein. EP-A-900 943 beschreibt eine Lenhsäule näch dem Oberbegriff von Anspruch 1.

Verstellbare Lenksäulen, bei denen die eingestellte Position mittels eines Spannmechanismus fixiert wird, wobei der Spannmechanismus reibschlüssig und/oder formschlüssig zusammenwirkende Feststellelemente miteinander in Eingriff hält, sind beispielsweise aus der EP 0 802 104 B1 oder EP 0 836 981 B1 bekannt. Bei der verstellbaren Lenksäule der EP 0 802 104 B1 werden im geschlossenen Zustand des Spannmechanismus Lamellenpakete miteinander verspannt, von denen eines an der Manteleinheit und das andere an der Trageinheit angebracht ist. Bei der Einrichtung der EP 0 836 981 B1 werden im geschlossenen Zustand des Spannmechanismus Verzahnungen miteinander in Eingriff gebracht, die eine Verstellung der Lenksäule blockieren. Der Spannmechanismus verspannt im geschlossenen Zustand sowohl bei der Lenksäule der EP 0 802 104 B1 als auch bei der Lenksäule der EP 0 836 981 B1 die Manteleinheit mit der Trageinheit, wodurch u.a. auch ein gutes Schwingungsverhalten erreicht wird.

Im Fall einer formschlüssigen Fixierung der Verstellung der Lenksäule müssen die miteinander zusammenwirkenden Verzahnungen entsprechend kräftig ausgelegt sein und es muss eine ausreichende Spannkraft vorgesehen sein, damit die Verzahnungen bei einer auf die Lenksäule wirkenden Kraft nicht außer Eingriff gelangen können. Damit werden die Wege und Kräfte für die Betätigung des Betätigungshebels größer. Auch bei einer reibschlüssigen Halterung mittels einer größeren Anzahl von Lamellen ist ein relativ großer Öffnungsweg erforderlich, um die Lamellen ausreichend zu beabstanden und eine leichtgängige Verstellung zu ermöglichen. Außerdem ist eine entsprechend hohe Spannkraft erforderlich.

Aus der WO 2004/069629 A1 und der US 5,377,555 A ist es weiters bekannt, zwischen den beiden gegeneinander verdrehbaren Spanngliedern des Spannmechanismus Wälzkörper anzuordnen, um die Gleitreibung durch eine Rollreibung zu ersetzen. Damit wird zwar die Betätigungskraft herabgesetzt, allerdings muss dennoch die notwendige Klemmkraft zum sicheren Schließen des Spannmechanismus aufgebracht werden. Die notwendige Kraft wird nur um die Differenz zwischen Gleit- und Rollreibung vermindert. Weiters muss sichergestellt werden, dass der Betätigungshebel seine jeweils eingestellte Endstellung, insbesondere in der Endstellung, in der der Spahnmechanismus geschlossen ist, nicht selbsttätig verändert. Andernfalls könnte sich der Spannmechanismus während der Fahrt selbsttätig öffnen und die Lenksäule damit ihre Lage verändern. Zu diesem Zweck ist es beispielsweise bekannt, die Laufbahnen der beiden Spannglieder im Bereich der geschlossenen Endstellung des Betätigurigshebels mit längeren Abschnitten auszubilden, über welche es bei einer gegenseitigen Verdrehung der beiden Spannglieder zu keiner Änderung der Spannkraft kommt. Dies hat jedoch den Nachteil, dass der Betätigungshebel über einen entsprechend großen Bereich mit einer relativ hohen Kraft betätigt werden muss, bis er seine geschlossene Endstellung erreicht. Weiters erhält der Bediener keine Rückmeldung, beispielsweise in Form eines Einrastens, dass die geschlossene Position erreicht ist.

Bei der Einrichtung der US 5,377,555 A werden daher die Laufbahnen der Wälzkörper anschließend an einen rampenartigen Anstieg mit einem kleinen Abfall ausgebildet, so dass in der Schließstellung der Spannglieder ein Einrasten erfolgt. Dies hat jedoch ein Nachlassen der Spannung im geschlossenen Zustand des Spannmechanismus zur Folge. Zudem führt ein plötzliches Nachlassen der aufzuwenden Kraft häufig zu einer Irritation des Fahrers, so dass dieser den Spannmechanismus nochmals öffnet und schließt und hierbei die Position des Lenkrads nachstellen muss.

Der Bedienvorgang der beschriebenen Einrichtungen ist unkomfortabel. Beim Öffnen des Spannmechanismus muss der Fahrer die Hand vom Steuerrad nehmen, den verdeckt hinter dem Steuerrad liegenden Betätigungshebel greifen und verstellen. Erst danach kann der Fahrer das Steuerrad in den vorgegebenen Verstellrichtungen positionieren. Nachdem das Steuerrad richtig positioniert ist, muss er für das Schließen des Spannmechanismus in der gleichen Weise wie für das Öffnen vorgehen, wobei er das Steuerrad mit einer Hand in der gewünschten Position halten muss. Die Lage genau in der gewünschten Position bis zum endgültigen Schließen des Spannmechanismus zu halten, erweist sich als schwierig. Für jede kleine Nachkorrektur muss dieselbe Prozedur durchlaufen werden, was stets mit demselben Problem verbunden ist. Außerdem ist ein Verstellen der Lenksäule während der Fahrt praktisch ausgeschlossen.

Es ist weiters bekannt, die Verschwenkung einer Manteleinheit gegenüber einer Trageinheit in verschiedenen Schwenkstellungen zu blockieren, indem ein an der Trageinheit in achsialer Richtung verschiebbar geführter Stift in eine von mehreren Rastausnehmungen, die an einem Teil der Manteleinheit angeordnet sind, eingeführt wird. Zum Verschwenken der Manteleinheit wird der Stift gegen die Kraft einer Feder aus der Rastausnehmung, in die er eingreift, herausgezogen. Nach Einstellung der gewünschten Schwenkposition der Manteleinheit wird der Stift freigegeben, wodurch er von der Feder wiederum in eine der Rastausnehmungen hineingezogen wird. Die Verstellung solcher Lenksäulen ist zwar einfach und komfortabel, allerdings weisen diese Lenksäulen ein schlechteres Schwingungsverhalten auf, da kein Spannmechanismus vorhanden ist, der im fixierten Zustand der Lenksäule die Manteleinheit mit der Trageinheit verspannt. Derartige Lenksäulen werden auch als "Head-Tilt"-Lenksäulen bezeichnet.

Eine Lenksäule mit einer ähnlichen Fixiereinrichtung ist auch aus der WO 2004/051807 A2 bekannt. Hier sind zwei gegeneinander verschwenkbare Abschnitte der Manteleinheit über eine Kolben-Zylinder-Einheit verbunden. Es sind verschiedene Mechanismen gezeigt, um in der eingestellten Position der Lenksäule die Kolbenstange gegenüber dem Zylinder zu fixieren.

Weiters wird in der DE 3914 608 C1 die Fixierung der Längenverstellung einer Lenksäule mittels einer verzahnten Rastklinke beschrieben. Die die Lenkspindel drehbar lagernde Manteleinheit weist eine in Längsrichtung der Lenksäule verlaufende Außenverzahnung auf, mit der zur Blockierung der Längsverstellung eine Rastklin-ke in Eingriff kommen kann. Die Rastklinke wird im fixierten Zustand der Lenksäule von einem Keilkörper in die Verzahnung der Manteleinheit eingedrückt. Zum Öffnen der Lenksäule wird der Keilkörper gegen die Kraft einer Feder linear verschoben und gibt in der Folge die Rastklinke frei.

Aus der EP 1 188 639 B1 ist weiters eine verstellbare Lenksäule bekannt, bei welcher zur Feststellung der eingestellten Position der Lenksäule äußere und innere Klemmbacken vorhanden sind, zwischen denen miteinander zu verspannende Lamellen angeordnet sind. Die inneren Klemmbacken werden hierzu mittels Nocken nach außen gedrückt, die hierbei an einem linear verschiebbaren Nockenkörper verschwenkbar gelagert sind. Zum Verstellen der Lenksäule wird der Nockenträger gegen die Kraft einer Feder linear verschoben, wodurch die Nocken verschwenkt werden und die inneren Klemmbacken unter Freigabe der verspannten Lamellen nach innen verschoben werden. Nachteilig an dieser Einrichtung ist die relativ komplizierte Konstruktion mit dem linear verschiebbaren Nockenträger und den verschwenkbar daran angeordneten Nocken und den mit diesen zusammenwirkenden Klemmbacken, welche eine vergleichsweise große Bauhöhe mit sich bringt, die zu einer Einschränkung des Fußraums führt. Weiters wird auch bei dieser Konstruktion kein optimales Schwingungsverhalten im festgestellten Zustand der Lenksäule erreicht.

Die aus der DE 3241 575 A bekannte teleskopierbare Lenksäule weist zum Feststellen der eingestellten Position ein Arretierglied auf, welches mittels einer drehbaren, ein Gewinde aufweisenden Arretierstange in Längsrichtung der Lenksäule verschiebbar ist. Die Arretierstange wird durch einen Hebel gedreht, der ausgehend von einer Arretierstellung gegen die Kraft einer Feder in eine Freigabestellung verschwenkbar ist. Die aufbringbare Feststellkraft der Lenksäule ist bei einer solchen Konstruktion relativ gering.

Bei der verstellbaren Lenksäule der US 2005/0127656 A1 ist die Schwenkposition der Lenksäule formschlüssig mittels Verzahnungen gehalten, während die Längeneinstellung an einer anderen Position durch einen Spannmechanismus reibschlüssig gehalten ist. Dieser Spannmechanismus umfasst einen Spannbolzen und auf dem Spannbolzen angeordnete Spannglieder; die mittels einer Nocke auseinanderspreizbar sind. Das Öffnen und Schließen erfolgt mittels eines Hebels, der über eine Druckstange auf einen die Nocke betätigenden Hebel wirkt. Das Öffnen der Feststelleinrichtung erfolgt gegen die Kraft einer Feder. Die aus dieser Schrift bekannte Konstruktion ist kompliziert und auch hier kann kein optimales Schwingungsverhalten im festgestellten Zustand der Lenksäule erreicht werden.

Aufgabe der Erfindung ist es, eine verbesserte Lenksäule der eingangs genannten Art bereitzustellen, die sehr komfortabel und leicht zu bedienen ist und eine genaue Positionierung des Steuerrades in Bezug auf den Fahrer gestattet.

Erfindungsgemäß gelingt dies bei einer Lenksäule der eingangs genannten Art dadurch, dass das erste Spannglied von einer Spannfeder in seine Schließstellung beaufschlagt ist, wobei das erste Spannglied durch eine auf ein Betätigungselement ausgeübte Betätigungskraft gegen die Kraft der Spannfeder von seiner Schließstellung in seine Offenstellung verdrehbar ist und bei Beendigung der auf das Betätigungselement wirkenden Betätigungskraft die Spannfeder das erste Spannglied von seiner Offenstellung in seine Schließstellung verdreht.

Bei einer erfindungsgemäßen Lenksäule wird zum Einstellen der Position der Lenksäule das erste Spannglied gegen die Kraft der Spannfeder in seine Offenstellung verdreht, beispielsweise mittels eines am ersten Spannglied angebrachten Betätigungshebels. Nach der gewünschten Verstellung der Lenksäule kann das Spannglied einfach freigegeben werden, worauf die Arretierung mittels der Spannfeder selbsttätig bewirkt wird. Hierbei kommt es auch zur Verspannung der Manteleinheit mit der Trageinheit durch den Spannmechanismus, so dass für den Fahrer kein Spiel der eingestellten Position der Lenksäule spürbar ist und Schwingungen der Manteleinheit gegenüber der Trageinheit vermieden werden können. Durch die zwischen den Spanngliedern angeordneten Wälzkörper wird die Reibung so stark herabgesetzt, dass das selbsttätige Schließen des Spannmechanismus durch eine Spannfeder mit einer nicht zu hohen Federkraft ermöglicht wird, welche beim Öffnen des Spannmechanismus überwunden werden muss.

Im geschlossenen Zustand des Spannmechanismus greift zur Feststellung der Verstellung der Lenksäule in zumindest einer Verstellrichtung eine Verzahnung eines auf dem Spannbolzen angeordneten Teils in eine Verzahnung ein, die an einem Seitenschenkel der Trageinheit oder an einer am Seitenschenkel der Trageinheit angeordneten Zahnplatte angeordnet ist. Diese Verzahnungen werden von der Spannfeder zusammengedrückt.

In einer vorteilhaften Ausführungsform der Erfindung ist vorgesehen, dass die Trageinheit Seitenschenkel aufweist, zwischen denen die Manteleinheit angeordnet ist und die im geschlossenen Zustand des Spannmechanismus von der Spannfeder beidseitig an die Manteleinheit angedrückt sind. Die Andrückkraft wird somit zumindest für einen der Seitenschenkel über die aneinandergedrückten Verzahnungen übertragen.

In einer vorteilhaften Ausführungsform der Erfindung wird die das erste Spannglied in seine Öffnungsstellung verdrehende Betätigungskraft über einen Bowdenzug übertragen. Das Betätigungselement zum Öffnen des Spannmechanismus kann dadurch an einer für den Fahrer leicht zugänglichen Stelle angeordnet werden. Beispielsweise kann das Betätigungselement so angeordnet werden, dass der Fahrer beide Hände am Lenkrad belassen kann und das Betätigungselement mit Fingern einer Hand bedienen kann. Eine entsprechende Kraftübersetzung zwischen der auf das Betätigungselement ausgeübten Betätigungskraft und der auf das erste Spannglied wirkenden Öffnungskraft kann hierbei vorgesehen werden.

Eine erfindungsgemäße Lenksäule kann in der Neigung bzw. Höhe und/oder Länge verstellbar ausgebildet sein. In einer vorteilhaften Ausführungsform der Erfindung weist die Lenksäule zumindest eine verstellbarkeit in der Neigung bzw. Höhe auf.

Vorzugsweise erfolgt die Feststellung der Verstellung in jede Verstellrichtung, in welche die Lenksäule verstellbar ist, mittels ineinander eingreifender Verzahnungen, die von der Spannfeder im geschlossenen Zustand des Spannmechanismus zusammengedrückt werden. Es ist bevorzugt, dass diese Verzahnungen sich in Ebenen erstrecken, die quer, insbesondere rechtwinklig, zur Achse des Spannbolzens liegen.

Weitere Vorteile und Einzelheiten der Erfindung werden im Folgenden anhand der beiliegenden Zeichnung erläutert. In dieser zeigen:
- Fig. 1: eine Schrägsicht des an das Lenkrad anschließenden Abschnitts einer erfindungsge- mäßen Lenksäule, im geschlossenen Zustand des Spannmechanismus;
- Fig. 2: die Lenksäule von Fig. 1 im geöffneten Zustand des Spannmechanismus;
- Fig. 3: eine Schrägsicht des Spannmechanismus und der Feststellelemente für die Neigungsverstellung im geschlossenen Zustand des Spannmechanismus;
- Fig. 4: die Teile von Fig. 3 im geöffneten Zustand des Spannmechanismus;
- Fig. 5: die Teile von Fig.3 ohne den Bodenzug und das Betätigungselement in einer aus- einandergezogenen Darstellung;
- Fig. 6: und Fig. 7 die beiden Verschlussglieder und die dazwischenliegenden, in einem Käfig gelagerten Wälzkörper in Schrägsichten aus unterschiedlichen Blickwinkeln;
- Fig. 8: einen Vertikalschnitt durch die in Fig. 3 dargestellten Teile (geschlossener Zustand des Spannmechanismus);
- Fig. 9: einen Vertikalschnitt durch die in Fig. 4 dargestellten Teile (geöffneter Zustand des Spannmechanismus);
- Fig. 10: eine Draufsicht auf die Lenksäule (ohne Lenkrad);
- Fig. 11: und Fig. 12 Seitenansichten der Lenksäule (ohne Lenkrad) im geöffneten und geschlos- senen Zustand des Spannmechanismus;
- Fig. 13: eine Schrägsicht eines an das Lenkrad anschließenden Abschnitts einer erfindungsge- mäßen Lenksäule gemäß.einer zweiten Ausführungsform der Erfindung;
- Fig. 14: eine Seitenansicht des Spannmechanismus und der Feststellelemente für die Höhen- verstellung gemäß der zweiten Ausführungsform;
- Fig. 15: einen Schnitt entlang der Linie A-A von Fig. 14;
- Fig. 16: die Teile von Fig. 14 in einer auseinandergezogenen Darstellung;
- Fig. 17: und 18 eine schematische Seitenansicht und Draufsicht einer Lenksäule gemäß einer weiteren Ausführungsform der Erfindung;
- Fig. 19: eine Explosionsdarstellung von Teilen des Spannmechanismus in Schrägsicht;
- Fig. 20: eine Schrägsicht des die Verzahnung aufweisenden zweiten Spanngliedes aus einem gegenüber Fig. 19 geänderten Blickwinkel.

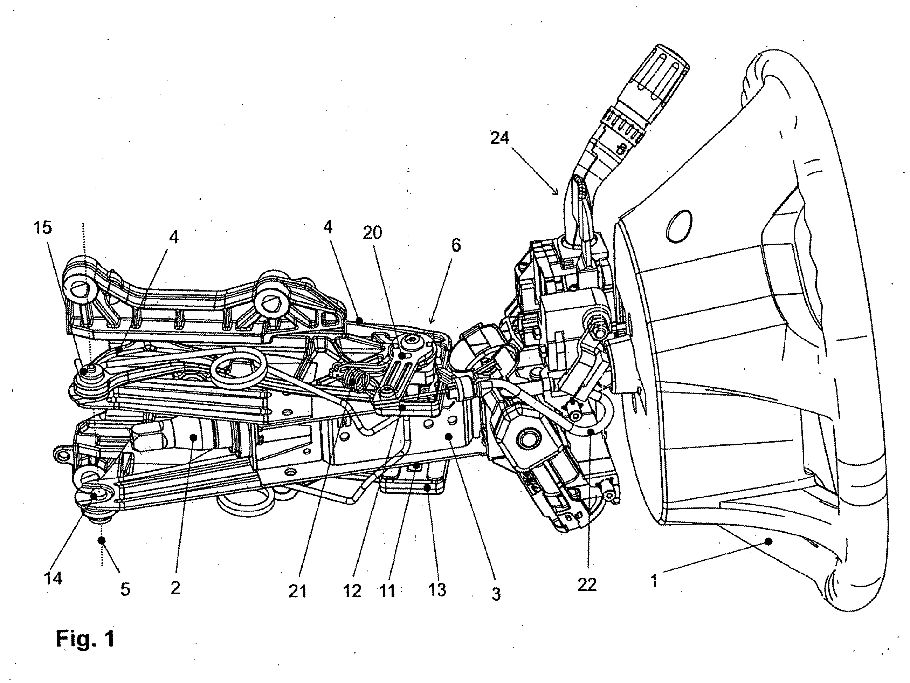

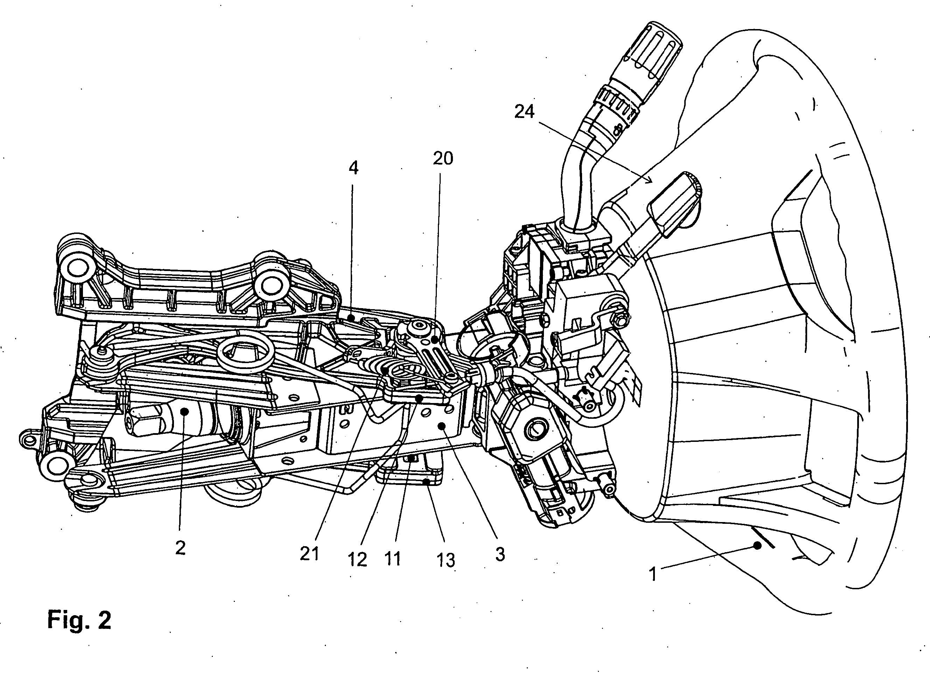

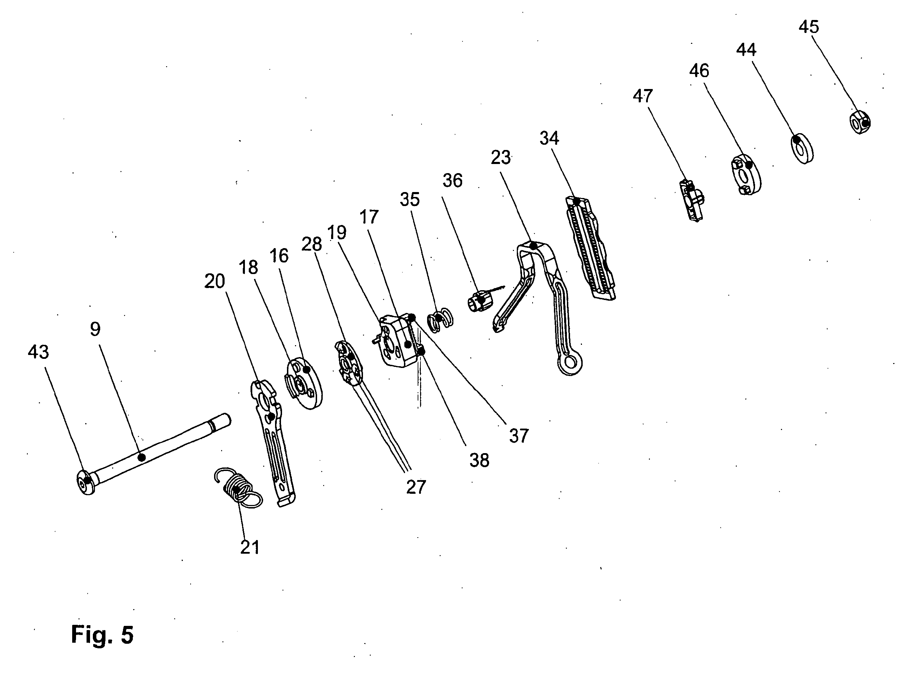

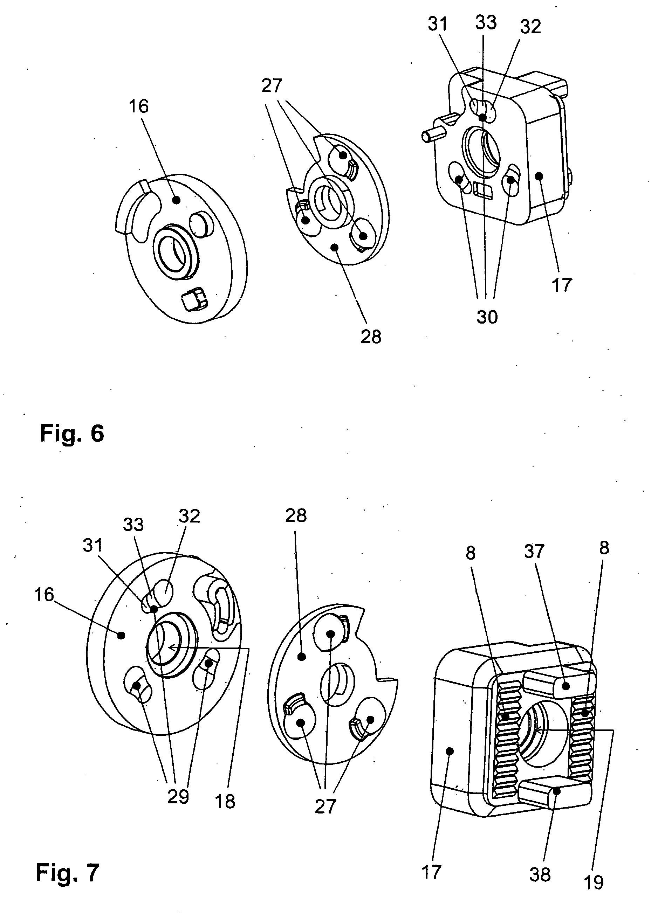

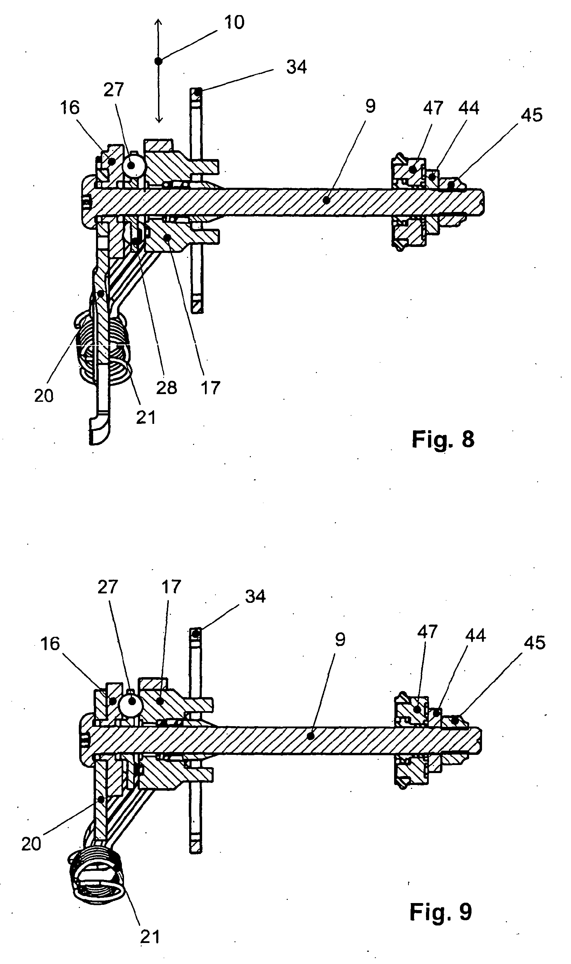

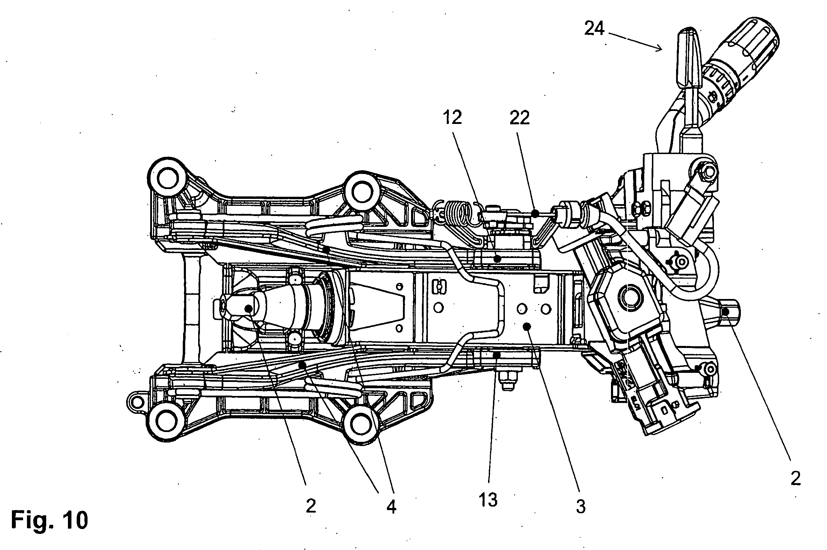

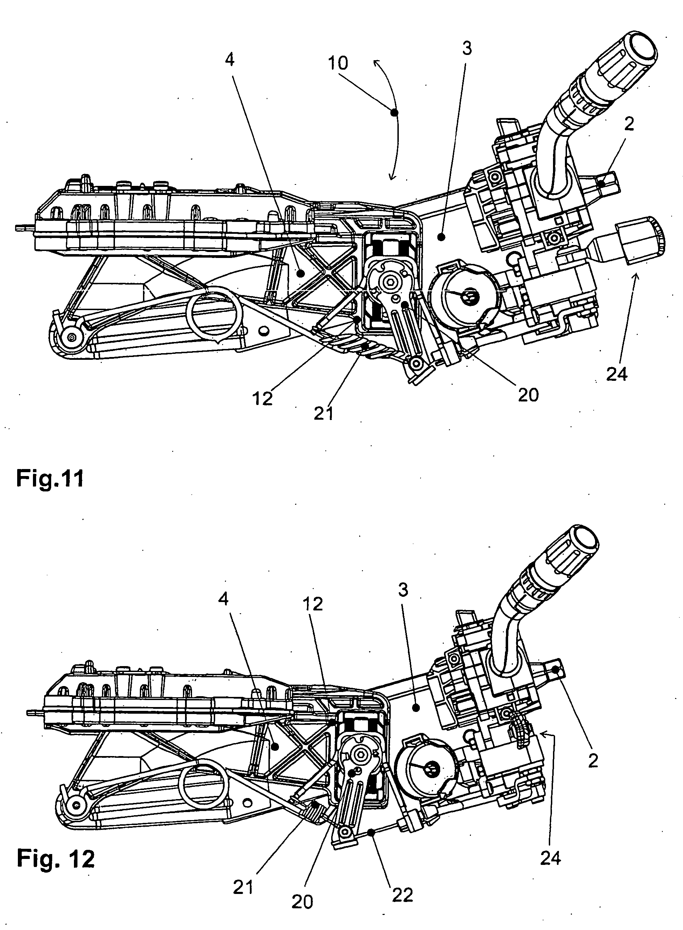

Eine vorteilhafte Ausführungsform der Erfindung ist in den Fig. 1 bis 12 dargestellt. In Fig. 1 ist der an das Lenkrad anschließende Abschnitt der Lenksäule zusammen mit dem Lenkrad 1 dargestellt. Die Lenksäule umfasst eine durch Drehung des Lenkrads 1 verdrehbare Lenkspindel 2, von der ein an das Lenkrad 1 anschließender Abschnitt in einer Manteleinheit 3 drehbar gelagert ist. Die weiteren in Richtung zum Lenkgetriebe anschließenden Abschnitte der Lenkspindel 2 sind in den Figuren nicht dargestellt. Zwei oder mehrere solcher Abschnitte sind in herkömmlicher Weise über Kardangelenke miteinanderverbunden.

Die Lenksäule umfasst weiters eine Trageinheit 4, die mit dem Chassis des Kraftfahrzeugs verbunden ist.

Die Lenksäule ist zumindest in ihrer Neigung verstellbar, was bei der für Personenkraftwagen üblichen Anordnung der Lenksäule zu einer Höhenverstellung der Lenksäule führt. Hierzu ist die Manteleinheit 3 gegenüber der Trageinheit 4 um eine Schwenkachse 5 verschwenkbar, die quer zur Lenkspindel 2 liegt.

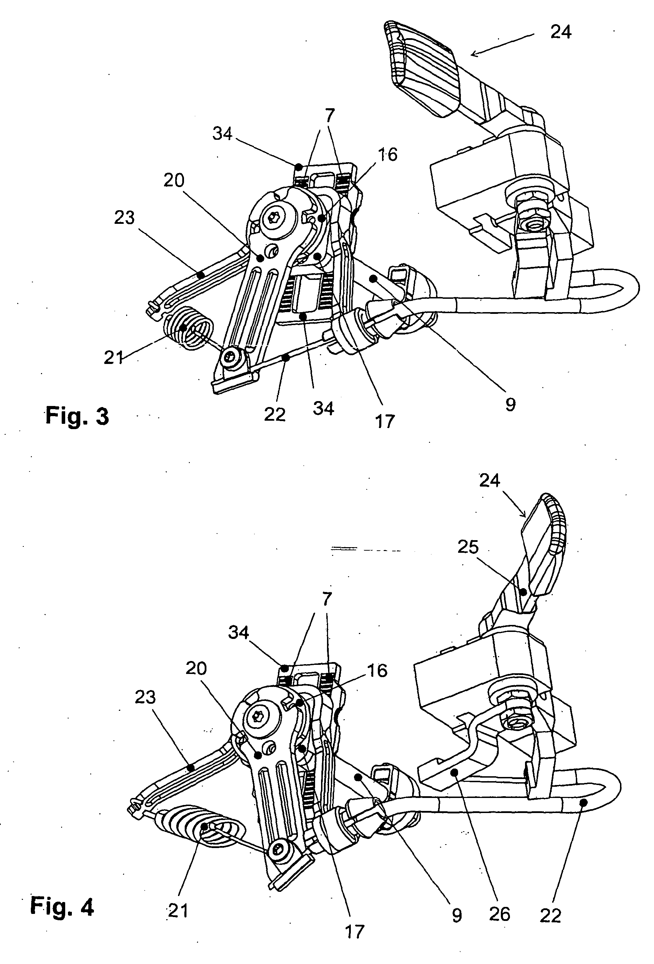

Um die eingestellte Schwenkposition der Manteleinheit 3 gegenüber der Trageinheit 4 zu fixieren ist ein Spannmechanismus 6 vorhanden. Im geschlossenen Zustand des Spannmechanismus 6 sind Verzahnungen 7, 8 (vgl. z.B. Fig. 3, 4 und 7) miteinander im Eingriff. Die die Verzahnungen 7, 8 aufweisenden Teile bilden Feststellelemente zur Fixierung der eingestellten Position der Lenksäule.

Der Spannmechanismus 6 umfasst einen Spannbolzen 9, der die Manteleinheit 3 und die Trageinheit 4 durch Öffnungen durchsetzt und quer zur Achse der Lenkspindel 2 steht.

Die Verzahnungen 7, 8 erstrecken sich in Ebenen, die rechtwinklig zur Längsachse des Spannbolzens 9 liegen. Diese Ebenen liegen parallel zu den Ebenen, in denen Seitenschenkel 12, 13 der Trageinheit 4 angeordnet sind, zwischen denen die Manteleinheit 3 liegt.

Die Öffnungen 11 der Trageinheit 4 sind in den Seitenschenkeln 12, 13 der Trageinheit 4 angeordnet, zwischen denen die Manteleinheit 3 liegt. Diese Öffnungen 11 sind hierbei in Form von Langlöchern ausgebildet, die sich zumindest annähernd in eine der Neigungsverstellung bzw. Höhenverstellung entsprechende Verstellrichtung 10 der Lenksäule erstrecken.

Die Öffnung in der Manteleinheit 3 kann im gezeigten Ausführungsbeispiel, in welchem die Lenksäule lediglich in ihrer Neigung verstellbar ist, als Durchgangsöffnung mit rundem Querschnitt ausgebildet sein. Insbesondere falls eine zusätzliche Längsverstellung der Lenksäule gewünscht ist, so kann diese Öffnung als Langlochöffnung ausgebildet sein, die sich in achsialer Richtung der Lenkspindel 2 erstreckt. Es könnten sich dann weiters auch die die Schwenkachse 5 bildenden Stifte 14, 15 durch Langlöcher in der Manteleinheit 3 erstrecken, um die Längsverschiebung der Manteleinheit 3 zu ermöglichen. Denkbar und möglich wäre es auch, eine zusätzliche Führungseinheit vorzusehen, gegenüber der die Manteleinheit 3 in Längsrichtung der Lenkspindel 2 verschiebbar geführt ist und welche mit der Trageinheit 4 verschwenkbar verbunden ist. Derartige Konstruktionen sind bekannt.

Der Spannmechanismus 6 umfasst weiters ein erstes und ein zweites Spannglied 16,17, die auf dem Spannbolzen 9 angeordnet sind, wobei der Spannbolzen 9 Öffnungen 18, 19 im ersten und zweiten Spannglied 16, 17 durchsetzt. Das zweite Spannglied 17 ist gegenüber der Trageinheit 4 verdrehgesichert. Das erste Spannglied 16 ist gegenüber dem zweiten Spannglied 17 zum Öffnen und Schließen des Spannmechanismus 6 verdrehbar. Zu diesem Zweck ist im Ausführungsbeispiel gemäß den Fig. 1 bis 9 ein Spannhebel 20 mit dem ersten Spannglied 16 verbunden. Auf diesen Spannhebel 20 wirkt einerseits eine Spannfeder 21, andererseits ein Bowdenzug 22. Die Spannfeder 21 ist im gezeigten Ausführungsbeispiel als Schraubenfeder ausgebildet und mit ihrem einen Ende am Spannhebel 20 und mit ihrem anderen Ende an einem Haltebügel 23 befestigt, welcher am zweiten Spannglied 17 angebracht ist und mit einem zweiten Arm auch das Endstück des Schlauchs des Bowdenzugs 22 hält. Der Bowdenzug 22 führt zu einem Betätigungselement 24 für den Spannmechanismus, welches hier in Form eines Betätigungshebels ausgebildet ist. Durch eine entsprechende Wahl der Hebelarme 25, 26 des Betätigungselements 24 und des Hebelarms des Spannhebels 20 kann die auf das Betätigungselement 24 wirkende Betätigungskraft entsprechend übersetzt werden, damit die aufzubringende Kraft bzw. der Betätigungsweg zum Öffnen des Spannmechanismus 6 entsprechend angepasst werden kann.

Zwischen dem ersten und dem zweiten Spannglied 16, 17 sind Wälzkörper 27 angeordnet, die im gezeigten Ausführungsbeispiel in Form von Kugeln ausgebildet sind. Die Wälzkörper 27 sind drehbar in einem Käfig 28 gehalten und rollen bei der Verdrehung des ersten Spannglieds 16 gegenüber dem zweiten Spannglied 17 jeweils entlang von Laufbahnen 29, 30 des ersten und zweiten Spannglieds 16, 17 ab. Die Laufbahnen 29, 30 umfassen jeweils einen tiefer liegenden Anfangsabschnitt 31, einen höher liegenden Endabschnitt 32 und einen dazwischen liegenden Rampenabschnitt (=eine Schrägfläche) 33.

In einer vorteilhaften Weiterbildung der Erfindung kann vorgesehen sein, dass eine oder beide der Laufbahnen 29, 30 über ihren gesamten Verlauf monoton ansteigend oder monoton abfallend ausgebildet sind. Monoton ansteigend oder monoton abfallend heißt, dass über die gesamte Länge der jeweiligen Laufbahn 29, 30 nur eine Neigungsrichtung vorhanden ist, dass also weder ansteigende und abfallende Abschnitte einander abwechseln noch Abschnitte vorhanden sind, die bezogen auf die achsiale Richtung des Spannbolzens 9 in einer konstanten Höhe verlaufen. Dieser monotone Verlauf kann dabei auch progressiv oder degressiv ausgebildet sein. Im Zusammenspiel mit der Spannfeder 21 kann so die wirkende Spannkraft eingestellt werden. Das wird möglich, da es in der erfindungsgemäßen Anordnung keines "Einrastens" des Betätigungselementes 24 bedarf. Dadurch kann der notwendige Verdrehwinkel zwischen den beiden Positionen des Spannhebels 20 für die geöffnete Stellung und die Schließstellung verringert werden.

In der in den Fig. 3, 8 und 12 dargestellten Schließstellung des ersten Spannglieds 16 liegen die Wälzkörper 27 in den tieferen Anfangsabschnitten 31 der Laufbahnen 29, 30. Wenn das erste Spannglied 16 in seine Schließstellung gedreht wird, so rollen die Wälzkörper 27 über die Rampenabschnitte 33 in die erhöhten Endabschnitte 32 der Laufbahn 29, 30, wodurch der Abstand zwischen den Spanngliedern 16, 17 etwas vergrößert wird und der Spannmechanismus seinen geschlossenen bzw. verspannten Zustand einnimmt.

Es könnte auch nur eines der beiden Spannglieder 16, 17 Laufbahnen mit Rampenabschnitten 33 aufweisen.

Im gezeigten Ausführungsbeispiel ist die Verzahnung 7 an einer Zahnplatte 34 angeordnet, die am Seitenschenkel 12 der Trageinheit 4 angebracht ist. Die Verzahnung 7 könnte auch direkt am Seitenschenkel 12 der Trageinheit 4 ausgebildet sein.

Im gezeigten Ausführungsbeispiel ist die mit der Verzahnung 7 zusammenwirkende Verzahnung 8 an der vom ersten Spannglied 16 abgewandten Seitenfläche des zweiten Spannglieds 17 ausgebildet. Denkbar und möglich wäre es auch, dass diese Verzahnung an einem separaten, zwischen dem zweiten Spannglied 17 und dem Seitenschenkel 12 angeordneten Teil ausgebildet ist.

Eine Feder 35 dient zur Beabstandung der Verzahnung 8 von der Verzahnung 7 im geöffneten Zustand des Spannmechanismus 6 und liegt hierzu einerseits am zweiten Spannglied 17, andererseits über eine Schiebehülse 36 an der Zahnplatte 34 bzw. am Seitenschenkel 12 an.

Zur Verdrehsicherung des zweiten Spannglieds 17 gegenüber der Trageinheit 4 weist dieses Fortsätze 37, 38 auf, die in die Öffnung der Zahnplatte 34 bzw. in die Öffnung 11 des Seitenschenkels 12 der Trageinheit 4 ragen.

Das erste Spannglied 16 bzw. der daran angebrachte Spannhebel 20 stützt sich in achsialer Richtung des Spannbolzens 9 an einem Endstück 43 des Spannbolzens 9 ab, welches in Form eines vergrößerten Kopfes des Spannbolzens ausgebildet ist.

Am gegenüberliegenden Ende des Spannbolzens 9 ist ein in Form einer Mutter ausgebildetes Endstück 45 angeordnet. An diesem stützt sich in achsialer Richtung des Spannbolzens 9 unter Zwischenschaltung einer Beilagscheibe oder eines Achsiallagers 44 eine Gegendruckplatte 46 ab, die auf dem Spannbolzen 9 angeordnet ist und im geschlossenen Zustand des Spannmechanismus 6 an den Seitenschenkel 13 der Trageinheit 4 angedrückt ist. Mit der Gegendruckplatte 46 ist weiters ein Anschlagdämpfer 47 verbunden.

Die Gegendruckplatte 46 könnte ebenfalls eine Verzahnung aufweisen, die mit einer Verzahnung am Seitenschenkel 13 oder an einer am Seitenschenkel 13 angebrachten Zahnplatte zusammenwirkt. Es könnten auch lediglich auf dieser Seite der Manteleinheit 3 miteinander zusammenwirkende Verzahnungen vorhanden sein.

Um die Neigung der Lenksäule zu verstellen, wird durch Verschwenkung des Betätigungselements 24 der Spannhebel 20 gegen die Kraft der Spannfeder 21 um die Achse des Spannbolzens 9 verschwenkt, wodurch das erste Spannglied 16 in seine Öffnungsstellung gedreht wird, in der die Verzahnungen 7, 8 außer Eingriff sind. Nach der gewünschten Verstellung der Lenksäule wird das Betätigungselement 24 losgelassen, worauf der Spannmechanismus 6 durch die Spannfeder 21 gespannt wird und die Seitenschenkel 12, 13 beidseitig an die Manteleinheit 3 angedrückt werden.

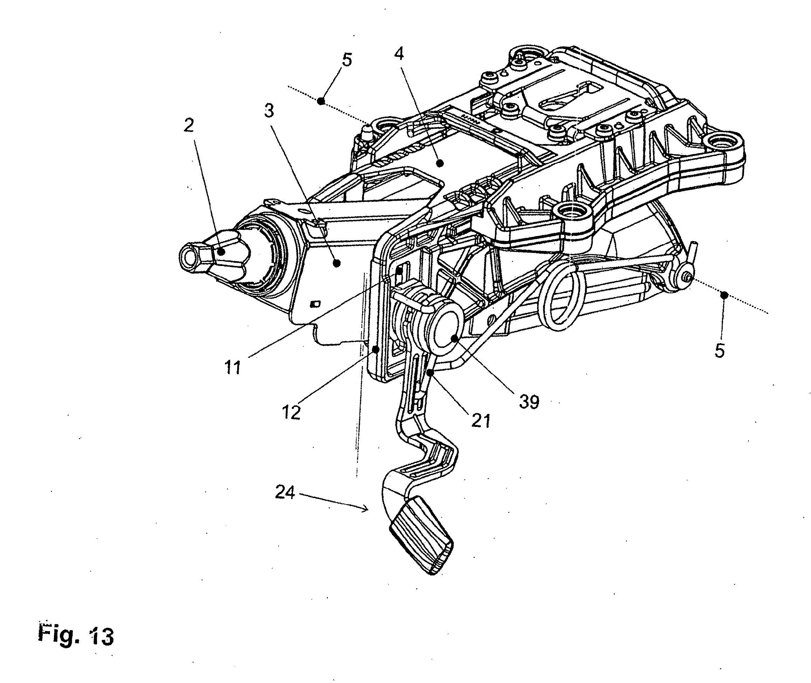

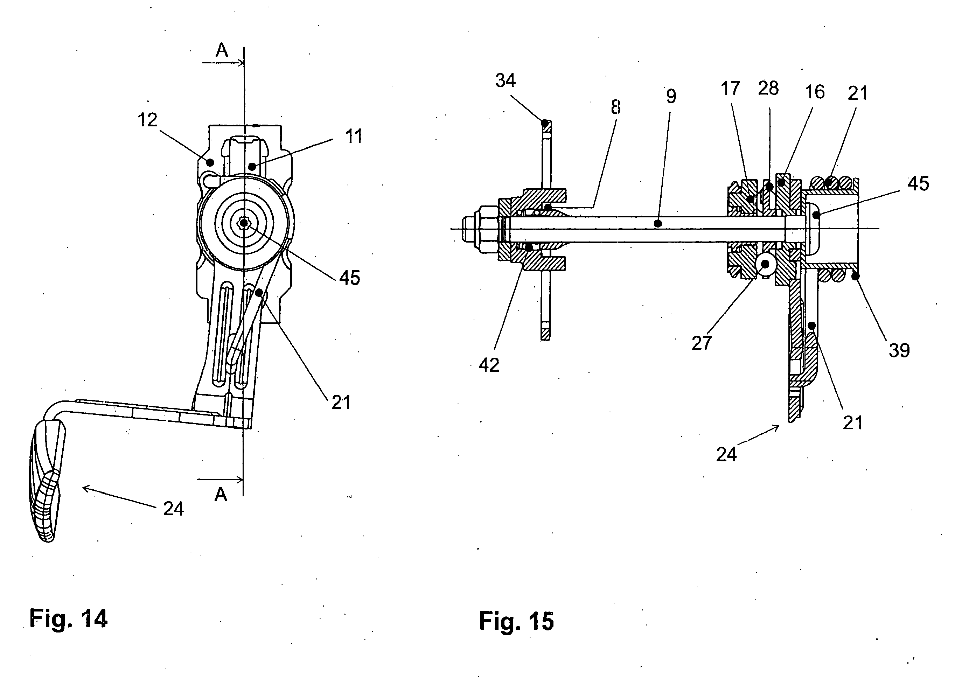

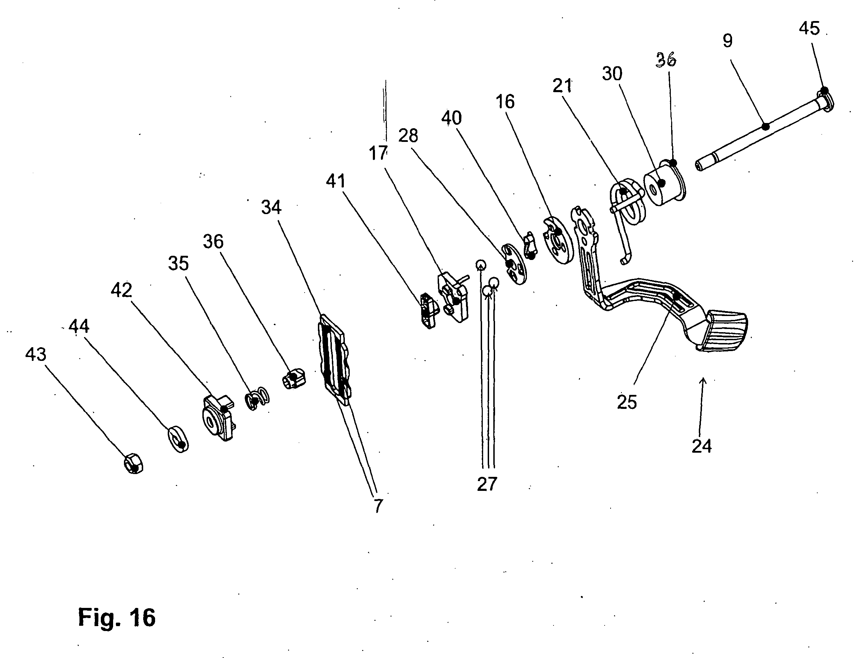

Das in den Fig. 13 bis 16 dargestellte Ausführungsbeispiel unterscheidet sich von dem zuvor beschriebenen Ausführungsbeispiel vor allem dadurch, dass das Betätigungselement 24, welches wiederum als Betätigungshebel ausgebildet ist, hier direkt am ersten Spannglied 16 angebracht ist. Die Spannfeder 21 wirkt zwischen dem Betätigungselement 24 und dem zweiten Spannglied 17 und ist vorzugsweise auf einem Federteller 39 angeordnet, der auf dem Spannbolzen 9 angeordnet ist.

Zwischen dem ersten Spannglied 16 und dem zweiten Spannglied 17 wirkt vorteilhafterweise ein radialer Anschlagdämpfer 40. Zwischen dem zweiten Spannglied 17 und dem Seitenschenkel 13 ist ein achsialer Anschlagdämpfer 41 angeordnet.

Die in die Verstellrichtung 10 unverschiebbar mit der Trageinheit 4 verbundene Verzahnung 7 ist wiederum an einer Zahnplatte 34 angeordnet, die an einem der Seitenschenkel 13 der Trageinheit 4 befestigt ist. Die mit dieser Verzahnung zusammenwirkende Verzahnung 8 ist an einer weiteren, auf dem Spannbolzen 9 angeordneten Zahnplatte 42 ausgebildet. Zwischen den Zahnplatten 34, 42 wirkt wiederum eine Feder 35 mit einer Schiebehülse 36. Die Zahnplatte 42 ist am von einer Mutter gebildeten Endstück 43 des Spannbolzens 9 über eine Beilagscheibe oder ein Achsiallager 44 abgestützt. Der Federteller 39 ist am gegenüberliegenden Endstück 45 des Spannbolzens 9 abgestützt, das von einem Kopf des Spannbolzens gebildet wird.

Zum Öffnen des Klemmmechanismus wird das erste Spannglied 16 mittels des Betätigungselements 24 gegen die Kraft der Spannfeder 21 verdreht, worauf die Verklemmung der Manteleinheit 3 mit der Trageinheit 4 aufgehoben wird und die Verzahnungen 7, 8 außer Eingriff gelangen. Nach der Einstellung der gewünschten Neigungsposition der Lenksäule wird das Betätigungselement 24 losgelassen, worauf die Spannfeder 21 das erste Spannglied 16 in seine Schließstellung verdreht, in der die Manteleinheit 3 mit der Trageinheit 4 verspannt ist und die Verzahnungen 7, 8 miteinander in Eingriff stehen.

Die Aufgabenstellung ist mit der erfindungsgemäßen Lösung verblüffend einfach gelöst und mit einer Reihe weiterer Vorteile verbunden.

In beiden gezeigten Ausführungsformen sorgt die Verspannung der Trageinheit 4 mit der Manteleinheit 3 und der in Eingriff stehenden Verzahnungen 7, 8 für eine hohe Steifigkeit und gute Reduktion der Schwingungen. Entsprechend können aufgrund der Verspannung die Verzahnungen 7, 8 feinstufig ausgebildet sein, sodass die Lenksäule genau positioniert werden kann.

In den Ausführungsbeispielen ist die Erfindung anhand von Long-Tilt-Lenksäulen erläutert. Long-Tilt-Lenksäulen sind auch dadurch gekennzeichnet, dass der Abstand zwischen Steuerrad und dem Drehpunkt der Verschwenkung vergleichsweise zu Head-Tilt-Lenksäulen lang ist. Das hat zur Folge, dass in jeder Position der Verstellung der Lenksäule die Drehachse beim Long-Tilt auf den Fahrer ausgerichtet ist, während die Drehachse beim Head-Tilt stark verschwenkt wird und nicht in jeder Position auf den Fahrer ausgerichtet ist.

Die Anwendung der Erfindung ist besonders für Long-Tilt-Lenkungen zu bevorzugen. Durch den vergleichsweise großen Abstand zwischen Klemmsystem und Drehpunkt werden bereits mit geringen Federkräften hohe Momente zur Fixierung des Stellteils gegenüber dem Halteteil ausgeübt, sodass hohe Steifigkeiten erreicht werden. Eine Verwendung der erfindungsgemäßen Anordnung ist jedoch prinzipiell auch bei. Head-Tilt-Lenksäulen möglich. Allerdings muss die Federkraft der Spannfeder erhöht werden, um eine hohe Steifigkeit entsprechend den Anforderungen zu erreichen.

Durch die selbsttätige Verspannung und die durch Hebelübersetzungen reduzierte Betätigungskraft am Betätigungselement 24 ist ein hoher Bedienkomfort erreicht.

Anstelle der in den Ausführungsbeispielen gezeigten Übersetzung des Hebelarms mit einem einfachen Hebel oder Bowdenzug kann auch ein mehrgliedriger Mechanismus mit beispielsweise Schubstangen, Zugstangen, Seilzügen, Umlenkungsgetrieben und/oder anderen Zwischengliedern Verwendung finden.

Anstelle von den gezeigten kugelförmigen Wälzkörpern 27 könnten beispielsweise auch zylindrische Wälzkörper eingesetzt werden. Diese können um Drehachsen des Käfigs 28 drehbar gelagert sein.

In den dargestellten Ausführungsbeispielen sind drei Wälzkörper 27 mit der entsprechenden Anzahl von Laufbahnen 29, 30 dargestellt. Denkbar und möglich wäre auch eine größere Anzahl von Wälzkörpern 27 und dazugehörigen Laufbahnen 29, 30.

In den gezeigten Ausführungsbeispielen ist weiters eine formschlüssige Fixierung der Neigungsverstellung der Lenksäule dargestellt. Denkbar und möglich wäre auch eine reibschlüssige Fixierung der Höhenverstellung.

Zusätzlich zu der dargestellten Neigungsverstellung kann die Lenksäule auch längsverstellbar ausgebildet sein, wobei die Fixierung der Längsverstellung formschlüssig, insbesondere mittels zusammenwirkender Verzahnungen, oder reibschlüssig erfolgen kann und vorzugsweise mittels des gleichen Spannmechanismus ebenfalls durch die Spannfeder 21 bewirkt wird.

In besonders vorteilhafter Weise genügt hierfür eine einzige Spannfeder 21. Darüber hinaus erfolgt die Verspannung der Lenksäule in Längs- und Neigungsrichtung in einem gemeinsamen Flächenbereich.

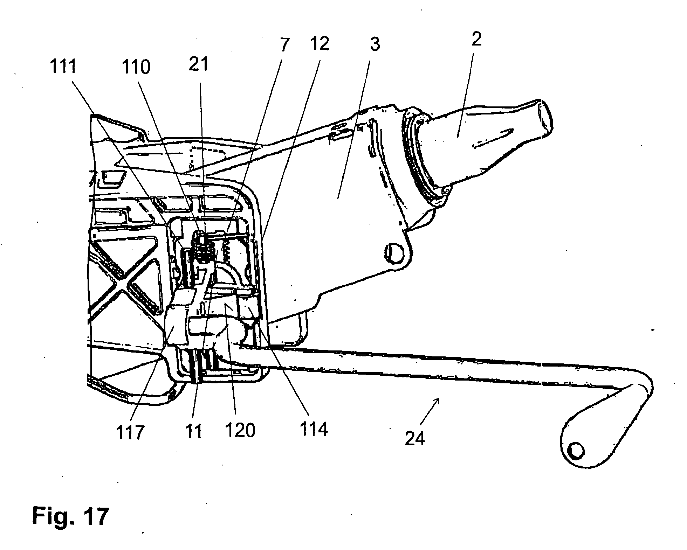

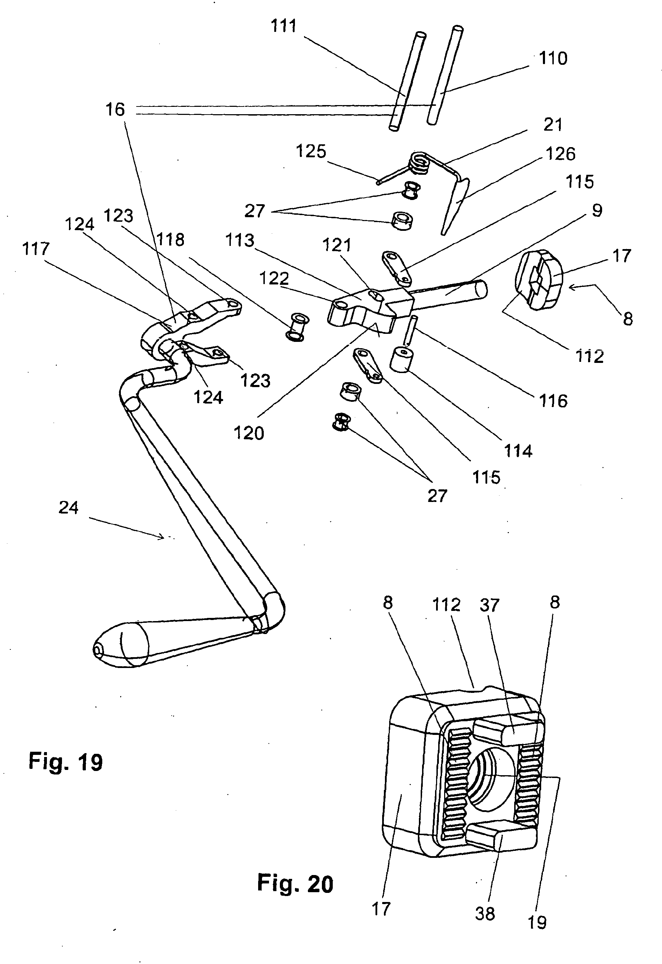

Ein weiteres Ausführungsbeispiel der Erfindung ist in den Fig. 17 bis 20 dargestellt. Die Lenksäule ist beispielhaft wiederum in der Höhe bzw. Neigung verstellbar dargestellt. Zur Feststellung der eingestellten Position im geschlossenen Zustand eines Spannmechanismus 6 dienen wiederum quer zur Achse des Spannbolzens 9 angeordnete ineinandergreifende Verzahnungen 7, 8. Die auf der einen Seite der Lenkspindel sich befindenden Teile des Spannmechanismus gehen insbesondere aus der Explosionsdarstellung gemäß Fig. 19 hervor. Die auf der anderen Seite der Lenkspindel liegenden Teile können beispielsweise analog wie bei den zuvor beschriebenen Ausführungsformen ausgebildet sein.

Auf dem Spannbolzen 9 ist endseitig ein Kopfstück 113 angeordnet, welches rechtwinklig zur Achse des Spannbolzens 9 sich erstreckende Durchgangsöffnungen 121, 122 aufweist. Die Durchgangsöffnung 121 wird von einem ersten Bolzen 110, die Durchgangsöffnung 122 von einem zweiten Bolzen 111 durchsetzt. Die Bolzen 110, 111 durchsetzen weiters Bohrungen 123, 124 in den beiden Gabelfortsätzen einer Gabel 117. Da der erste Bolzen 110 die Durchgangs- - öffnung 121 mit Spiel durchsetzt bzw. diese Durchgangsöffnung 121 in Form eines Langlochs ausgebildet ist, ist die Gabel 117 gegenüber dem Kopfstück 113 um den Bolzen 111 begrenzt verschwenkbar. Die Verschwenkung erfolgt mittels eines von einem Hebel gebildeten Betätigungselements 24. In die Durchgangsöffnung 122 ist eine den zweiten Bolzen 111 aufnehmende Hülse 118 eingesetzt.

Auf dem ersten Bolzen 110 sind Wälzkörper 27 drehbar gelagert, die beispielsweise wie gezeigt jeweils zweiteilig ausgebildet sein können, mit einer Nabe und einem darauf angeordneten Kranz. Die Wälzkörper 27 befinden sich beidseitig des Kopfstücks 113. Die Wälzkörper 27 wirken mit dem zweiten Spannglied 17 zusammen.

Auf dem ersten Bolzen 110 sind weiters beidseitig des Kopfstücks 113 Arme 115 angeordnet, die in vom ersten Bolzen 110 abgeiegenen Endabschnitten eine Achse 116 lagern (welche in Bohrungen in den Armen 115 eingreift). Auf dieser Achse 116 ist ein Wälzkörper 114 drehbar gelagert, der mit einer Führungsfläche 120 des Kopfstücks 113 zusammenwirkt.

Auf dem ersten Bolzen 110 ist weiters eine Spannfeder 21 angeordnet, von der ein Schenkel 125 am zweiten Bolzen 111 und der andere Schenkel 126 am Seitenschenkel 12 der Trageinheit 4 anliegt.

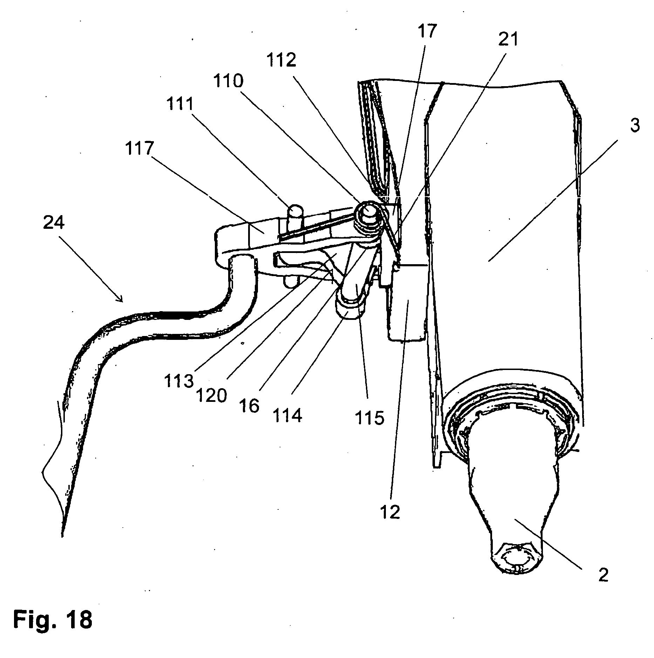

Ist das Betätigungselement 24 freigegeben, so ist der Spannmechanismus 6 von der Spannfeder 21 in seinen geschlossenen Zustand gebracht, der in den Fig. 17 und 18 dargestellt ist. Zum Öffnen des Spannmechanismus wird die Gabel 117 mit den Bolzen 110, 111 um die rechtwinklig zum Spannbolzen 9 stehende Achse des ersten Bolzens 110 gegen die Kraft der Spannfeder 21 verschwenkt. Die Gabel 117 mit den Bolzen 110, 111 bildet bei dieser Ausführungsform ein erstes Spannglied 16. Durch diese Verschwenkung gelangen die Wälzkörper 27 weiter in Richtung eines tiefsten Bereichs einer Rinne 112, die in die dem ersten Spannglied 16 zugewandte Seitenfläche des zweiten Spannglieds 17 eingebracht ist. Dabei wird die Verzahnung 8 des zweiten Spannglieds 8 außer Eingriff mit der Verzahnung 7 gebracht, die an einer am Seitenschenkel 12 gehaltenen Zahnplatte angeordnet ist.

Wird das Betätigungselement 24 losgelassen, so wird das erste Spannglied 116 von der Spannfeder 21 zurückgeschwenkt, wobei die Wälzkörper 27 an die Wand der Rinne 112 in deren ansteigenden Bereich anlaufen, wodurch das zweite Spannglied 17 gegen den Seitenschenkel 12 gedrückt wird. Dabei werden die Verzahnungen 8, 7 in Eingriff gebracht. Weiters wird der Seitenschenkel 12 gegen die Manteleinheit 3 gedrückt. Weiters wird hierbei auf den Spannbolzen 9 eine Zugspannung ausgeübt, wodurch auf der gegenüberliegenden Seite ebenfalls ein Seitenschenkel 13 gegen die Manteleinheit 3 gedrückt wird.

Der Wälzkörper 114 dient zur Führung der Bewegung gegenüber dem Kopfstück 113 auf einer Führungsfläche 120. Dieser Wälzkörper könnte gegebenenfalls (zusammen mit den ihn lagernden Teilen 115, 116) auch entfallen, wobei beispielsweise die Durchgangsöffnung 121 zur Führung der Bewegung des ersten Bolzens 110 ausgebildet sein könnte.

Auch bei dieser Ausführungsform könnte die Lenksäule statt dessen oder zusätzlich in ihrer Länge verstellbar sein.

### Legende

### zu den Hinweisziffern:

- 1: Lenkrad
- 2: Lenkspindel
- 3: Manteleinheit
- 4: Trageinheit,
- 5: Schwenkachse
- 6: Spannmechanismus
- 7: Verzahnung
- 8: Verzahnung
- 9: Spannbolzen
- 10: Verstellrichtung
- 11: Öffnung
- 12: Seitenschenkel
- 13: Seitenschenkel
- 14: Stift
- 15: Stift
- 16: erstes Spannglied
- 17: zweites Spannglied
- 18: Öffnung
- 19: Öffnung
- 20: Spannhebel
- 21: Spannfeder
- 22: Bowdenzug
- 23: Haltebügel
- 24: Betätigungselement
- 25: Hebelarm
- 26: Hebelarm
- 27: Wälzkörper
- 28: Käfig
- 29: Laufbahn
- 30: Laufbahn
- 31: Anfangsabschnitt
- 32: Endabschnitt
- 33: Rampenabschnitt
- 34: Zahnplatte
- 35: Feder
- 36: Schiebehülse
- 37: Fortsatz
- 38: Fortsatz
- 39: Federteller
- 40: Anschlagdämpfer
- 41: Anschlagdämpfer
- 42: Zahnplatte
- 43: Endstück
- 44: Achsiallager
- 45: Endstück
- 46: Gegendruckplatte
- 47: Anschlagdämpfer
- 110: erster Bolzen
- 111: zweiter Bolzen
- 112: Rinne
- 113: Kopfstück
- 114: Wälzkörper
- 115: Arm
- 116: Achse
- 117: Gabel
- 118: Hülse
- 120: Führungsfläche
- 121: Durchgangsöffnung
- 122: Durchgangsöffnung
- 123: Bohrung
- 124: Bohrung
- 125: Schenkel
- 126: Schenkel

## Patentansprüche

1. Lenksäule für ein Kraftfahrzeug, die zumindest in eine Verstellrichtung verstellbar ist, umfassend eine drehbar gelagerte Lenkspindel (2), eine Manteleinheit (3), die einen Abschnitt der Lenkspindel (2) drehbar lagert, eine Trageinheit (4), die mit dem Chassis des Kraftfahrzeugs verbindbar ist und gegenüber der die Manteleinheit (3) in die zumindest eine Verstellrichtung verstellbar ist, und einen Spannmechanismus (6), in dessen geöffnetem Zustand die Position der Lenksäule verstellbar ist und in dessen geschlossenem Zustand die Position der Lenksäule festgestellt ist und die Manteleinheit (3) mit der Trageinheit (4) verspannt ist, wobei der Spannmechanismus einen Spannbolzen (9), der die Manteleinheit (3) und die Trageinheit (4) quer zur Achse der Lenkspindel (2) durch Öffnungen (10, 11) durchsetzt, und erste und zweite auf dem Spannbolzen (9) angeordnete Spannglieder (16, 17) umfasst, von denen das erste Spannglied (16) zum Öffnen und Schließen des Spannmechanismus gegenüber dem zweiten Spannglieds (17) zwischen einer Offenstellung und einer Schließstellung um die Achse des Spannbolzens (9) oder um eine rechtwinklig zur Achse des Spannbolzens (9) stehende Achse verdrehbar ist und zur Feststellung der Verstellung der Lenksäule in zumindest einer Verstellrichtung eine Verzahnung (8) eines auf dem Spannbolzen (9) angeordneten Teils im geschlossenen Zustand des Spannmechanismus (6) in eine Verzahnung (7) eingreift, die an einem Seitenschenkel (12, 13) der Trageinheit (4) oder an einer am Seitenschenkel (12, 13) der Trageinheit (4) angebrachten Zahnplatte (34) ange- ordnet ist **dadurch gekennzeichnet, dass** das erste Spannglied (16) von einer Spannfeder (21) in seine Schließstellung beaufschlagt ist, wobei das erste Spannglied (16) durch eine auf ein Betätigungselement (24) ausgeübte Betätigungskraft gegen die Kraft der Spannfeder (21) von seiner Schließstellung in seine Offenstellung verdrehbar ist und bei Beendigung der auf das Betätigungselement (24) wirkenden Betätigungskraft die Spannfeder (21) das ersten Spannglied (16) von seiner Offenstellung in seine Schließstellung verdreht, und dass zwischen den Spannglieschen Wälzkörper (27) zur Reibungsminderung bei der gegenseitigen Verdrehung angeordnet sind

2. Lenksäule nach Anspruch 1, **dadurch gekennzeichnet, dass** die Trageinheit (4) Seitenschenkel (12, 13) aufweist, zwischen denen die Manteleinheit (3) angeordnet ist und die im geschlossenen Zustand des Spannmechanismus (6) beidseitig an die Manteleinheit (3) angedrückt sind.

3. Lenksäule nach Anspruch 1 oder 2, **dadurch gekennzeichnet, dass** das zweite Spannglied (17) das auf dem Spannbolzen (9) angeordnete Teil ist, welches die eine Verzahnung (8) aufweist.

4. Lenksäule nach Anspruch 1 oder 2, **dadurch gekennzeichnet, dass** eine Zahnplatte (42) auf dem Spannbolzen (9) angeordnet ist und die eine Verzahnung (8) aufweist.

5. Lenksäule nach einem der Ansprüche 1 bis 4, **dadurch gekennzeichnet, dass** die auf das Betätigungselement (24) ausgeübte Betätigungskraft zur Verschwenkung des ersten Spannglieds (16) mechanisch übersetzt ist.

6. Lenksäule nach Anspruch 5, **dadurch gekennzeichnet, dass** die auf das Betätigungselement (24) ausgeübte Betätigungskraft über einen Bowdenzug (22) auf das erste Spannglied (16) übertragen wird.

7. Lenksäule nach Anspruch 6, **dadurch gekennzeichnet, dass** das Betätigungselement (24) ein Betätigungshebel ist, an dem der Bowdenzug (22) angreift.

8. Lenksäule nach Anspruch 6 oder Anspruch 7, **dadurch gekennzeichnet, dass** mit dem ersten Spannglied (16) ein Spannhebel (20) verbunden ist, an dem einerseits die Spannfeder (21), andererseits der Bowdenzug (22) angreifen.

9. Lenksäule nach einem der Ansprüche 1 bis 5, **dadurch gekennzeichnet, dass** das Betätigungselement (24) ein Betätigungshebel ist, der am ersten Spannglied (16) angebracht ist

10. Lenksäule nach einem der Ansprüche 1 bis 9, **dadurch gekennzeichnet, dass** Laufbahnen (29) des ersten Spannglieds (16) und/oder Laufbahnen (30) des zweiten Spannglieds (17), entlang denen die Wälzkörper (27) beim Öffnen und Schließen des Spannmechanismus (6) abrollen, zwischen Anfangs- und Endabschnitten (31, 32), die bezogen auf die achsiale Richtung des Spannbolzens (9) in unterschiedlichen Höhen liegen, Rampenabschnitte (33) aufweisen.

11. Lenksäule nach einem der Ansprüche 1 bis 10, **dadurch gekennzeichnet, dass** Laufbahnen (29) des ersten Spanngliedes (16) und/oder Laufbahnen (30) des zweiten Spanngliedes, entlang denen die Wälzklappe (27) beim Öffnen und Schließen des Spannmechanismus (6) abrollen, über ihre gesamte Länge einen monoton ansteigenden oder monoton abfallenden Verlauf aufweisen.

12. Lenksäule nach einem der Ansprüche 1 bis 11, **dadurch gekennzeichnet, dass** die Wälzkörper (27) in einem zwischen dem ersten und dem zweiten Spannglied (16, 17) angeordneten Käfig (28) drehbar gelagert sind.

13. Lenksäule nach einem der Ansprüche 1 bis 12, **dadurch gekennzeichnet, dass** die Lenksäule zumindest in ihrer Neigung verstellbar ist, wobei die Manteleinheit (3) zur Verstellung der Neigung der Lenksäule um eine Schwenkachse (5) gegenüber der Trageinheit (4) verschwenkbar ist.

## Claims

1. A steering column for a motor vehicle which is adjustable at least in one adjustment direction, comprising a rotatably mounted steering shaft (2), a casing unit (3) which rotatably mounts a section of the steering shaft (2), a support unit (4) which can be connected to the chassis of the motor vehicle and relative to which the casing unit (3) is adjustable into the at least one adjustment direction, and a tensioning mechanism (6), in the opened state of which the position of the steering column is adjustable and in the closed state of which the position of the steering column is fixed and the casing unit (3) is braced with the support unit (4), the tensioning mechanism having a tightening bolt (9) which penetrates the casing unit (3) and the support unit (4) transversely to the axis of the steering shaft (2) through openings (10, 11), and comprising first and second tensioning members (16, 17) arranged on the tightening bolt (9), of which the first tensioning member (16) for opening and closing the tensioning mechanism is able to be turned relative to the second tensioning member (17) between an open position and a closed position about the axis of the tightening bolt (9) or about an axis at right-angles to the axis of the tightening bolt (9), and for locking the adjustment of the steering column in at least one adjustment direction a set of teeth (8) of a part arranged on the tightening bolt (9) in the closed state of the tensioning mechanism (6) engages in a.set of teeth (7) which is arranged on a side member (12, 13) of the support unit (4) or on a tooth rack (34) attached to the side member (12, 13) of the support unit (4), **characterised in that** the first tensioning member (16) is urged by a tensioning spring (21) into its closed position, the first tensioning member (16) being able to be turned from its closed position into its open position by an actuating force exerted on an actuating element (24) counter to the force of the tensioning spring (21) and upon termination of the actuating force acting on the actuating element (24) the tensioning spring (21) turning the first tensioning member (16) from its open position into its closed position, and **in that** rolling elements (27) for reducing friction upon the mutual turning are arranged between the tensioning members.

2. A steering column according to Claim 1, **characterised in that** the support unit (4) has side members (12, 13) between which the casing unit (3) is arranged and which in the closed state of the tensioning mechanism (6) are pressed against the casing unit (3) on both sides.

3. A steering column according to Claim 1 or 2, **characterised in that** the second tensioning member (17) is the part arranged on the tightening bolt (9) which has the one set of teeth (8).

4. A steering column according to Claim 1 or 2, **characterised in that** a tooth rack (42) is arranged on the tightening bolt (9) and has the one set of teeth (8).

5. A steering column according to one of Claims 1 to 4, **characterised in that** the actuating force exerted on the actuating element (24) is mechanically translated for pivoting the first tensioning member (16).

6. A steering column according to Claim 5, **characterised in that** the actuating force exerted on the actuating element (24) is transmitted to the first tensioning member (16) via a Bowden cable (22).

7. A steering column according to Claim 6, **characterised in that** the actuating element (24) is an actuating lever on which the Bowden cable (22) acts.

8. A steering column according to Claim 6 or Claim 7, **characterised in that** a tensioning lever (20) is connected to the first tensioning member (16), on which lever on one hand the tensioning spring (21) and on the other hand the Bowden cable (22) act.

9. A steering column according to one of Claims 1 to 5, **characterised in that** the actuating element (24) is an actuating lever which is attached to the first tensioning member (16).

10. A steering column according to one of Claims 1 to 9, **characterised in that** running tracks (29) of the first tensioning member (16) and/or running tracks (30) of the second tensioning member (17), along which the rolling elements (27) roll upon opening and closing the tensioning mechanism (6), have ramp sections (33) between starting and end sections (31, 32) which lie at different levels relative to the axial direction of the tightening bolt (9).

11. A steering column according to one of Claims 1 to 10, **characterised in that** running tracks (29) of the first tensioning member (16) and/or running tracks (30) of the second tensioning member, along which the rolling flap [sic] (27) roll upon opening and closing the tensioning mechanism (6), have a monotonically rising or monotonically falling path over their entire length.

12. A steering column according to one of Claims 1 to 11, **characterised in that** the rolling elements (27) are rotatably mounted in a cage (28) arranged between the first and the second tensioning member (16, 17).

13. A steering column according to one of Claims 1 to 12, **characterised in that** the steering column is adjustable at least in its inclination, the casing unit (3) being pivotable about a pivot axis (5) relative to the support unit (4) for adjusting the inclination of the steering column.

## Revendications

1. Colonne de direction de véhicule automobile réglable dans au moins une direction de réglage et comprenant une broche de direction (2) montée à rotation, un boîtier (3) logeant à rotation un segment de la broche de direction (2), une unité de support (4) reliée au châssis du véhicule et par rapport à laquelle le boîtier (3) est réglable au moins dans une direction de réglage, ainsi qu'un mécanisme de serrage (6) qui, à l'état ouvert, permet de régler la position de la colonne de direction et, à l'état fermé, bloque la position de la colonne de direction et le boîtier (3) est serré à l'unité de support (4),
le mécanisme de serrage comportant un boulon de serrage (9) traversant le boîtier (3) et l'unité de support (4) transversalement à l'axe de la colonne de direction (2) en passant par des ouvertures (10, 11) et comprenant un premier et un second organe de serrage (16, 17) installés sur le boulon de serrage (9), le premier organe de serrage (16) pouvant tourner par rapport au second organe de serrage (17) pour ouvrir et fermer le mécanisme de serrage entre une position d'ouverture et une position de fermeture, en tournant autour de l'axe du boulon (9) ou d'un axe perpendiculaire à celui-ci, et
pour bloquer le réglage de la colonne de direction dans au moins une direction de réglage, une denture (8) d'une pièce installée sur le boulon de serrage (9), engrène dans une denture (7) lorsque le mécanisme de serrage (6) est en position fermée, cette denture étant prévue sur une branche latérale (12,13) de l'unité de support (4) ou sur une plaque dentée (34) prévue sur la branche latérale (12, 13) de l'unité de support (4).
**caractérisée en ce que**
le premier élément de serrage (16) est sollicité vers sa position de fermeture par un ressort de tension (21),
le premier élément de serrage (16) pouvant être tourné par une force d'actionnement exercée sur un élément d'actionnement (24) contre la force du ressort de tension (21), entre sa position de fermeture et sa position d'ouverture et à la fin de l'application de la force d'actionnement agissant sur l'élément d'actionnement (24), le ressort de serrage (21) fait tourner l'organe de serrage (16) de sa position d'ouverture à sa position de fermeture, et entre les organes de serrage, sont installés des organes de roulement (27) pour réduire le frottement pour leur rotation réciproque.

2. Colonne de direction selon la revendication 1,
**caractérisée en ce que**
l'unité de support (4) comporte des branches latérales (12, 13) entre lesquelles se trouve le boîtier (3) et qui sont appliquées des deux côtés contre le boîtier (3) à l'état fermé du mécanisme de serrage (6).

3. Colonne de direction selon la revendication 1 ou 2,
**caractérisée en ce que**
le second organe de serrage (17) est la pièce installée sur le boulon de serrage (9), et qui comporte la denture (8).

4. Colonne de direction selon la revendication 1 ou 2,
**caractérisée par**
une plaque dentée (42) installée sur le boulon de serrage (9), et ayant une denture (8).

5. Colonne de direction selon les revendications 1 à 4,
**caractérisée en ce que**
la force d'actionnement exercée sur l'élément d'actionnement (24) est transmise mécaniquement pour basculer le premier organe de serrage (16).

6. Colonne de direction selon la revendication 5,
**caractérisée en ce que**
la force d'actionnement exercée sur l'élément d'actionnement (24) est transmise par un câble Bowden (22) au premier organe de serrage (16).

7. Colonne de direction selon la revendication 6,
**caractérisée en ce que**
l'élément d'actionnement (24) est un levier de manoeuvre relié au câble Bowden (22).

8. Colonne de direction selon la revendication 6 ou 7,
**caractérisée en ce qu'**
un levier tendeur (20) est relié au premier organe de serrage (16), levier dont une extrémité est reliée au ressort tendeur (21) et l'autre, au câble Bowden (22).

9. Colonne de direction selon les revendications 1 à 5,
**caractérisée en ce que**
l'élément d'actionnement (24) est un levier de manoeuvre prévu sur le premier organe de serrage (16).

10. Colonne de direction selon les revendications 1 à 9,
**caractérisée en ce que**
des chemins de circulation (29) du premier organe de serrage (16) et/ou des chemins de circulation (30) du second organe de serrage (17) le long desquels roulent les organes de roulement (27) à l'ouverture et à la fermeture du mécanisme de serrage (6), ont des segments de rampe (33) situés entre les segments de début et de fin (31, 32) situés à des niveaux différents par rapport à la direction axiale du boulon de serrage (9).

11. Colonne de direction selon les revendications 1 à 10,
**caractérisée en ce que**
les chemins de circulation (29) du premier organe de serrage (16) et/ou les chemins de circulation (30) du second organe de serrage le long desquels roulent les organes de roulement (27), à l'ouverture et à la fermeture du mécanisme de serrage (6), ont un tracé monotone croissant ou monotone décroissant sur toute la longueur.

12. Colonne de direction selon les revendications 1 à 11,
**caractérisée en ce que**
les organes de roulement (27) sont montés à rotation dans une cage (28) entre le premier et le second organe de serrage (16, 17).

13. Colonne de direction selon les revendications 1 à 12,
**caractérisée en ce que**
la colonne de direction est au moins d'inclinaison réglable et le boîtier (3) peut pivoter par rapport à l'unité de support (4) pour régler l'inclinaison de la colonne de direction autour d'un axe de pivotement (5).
